# EUROPÄISCHE PATENTSCHRIFT

(11) **EP 0 466 738 B1**
(45) Veröffentlichungstag und Bekanntmachung des Hinweises auf die Patenterteilung: **17.03.1993**
(21) Anmeldenummer: 90905431.4
(22) Anmeldetag: 06.04.1990
(51) Int. Cl.: H02H 9/00, H01F 27/42

(54) **VORRICHTUNG ZUR WECHSELSTROM-EINSCHALTBEGRENZUNG**
DEVICE FOR A.C. CUT-IN LIMITATION
PROCEDE POUR LIMITER LE COURANT ALTERNATIF D'ALLUMAGE

(30) Priorität: 11.04.1989 DE 3911742
(43) Veröffentlichungstag der Anmeldung: 22.01.1992
(73) Patentinhaber: FRAUNHOFER-GESELLSCHAFT ZUR FÖRDERUNG DER ANGEWANDTEN FORSCHUNG E.V., 80636 München (DE)
(72) Erfinder: KONSTANZER, Michael, D-7800 Freiburg (DE)
(86) Internationale Anmeldenummer: DE9000272
(87) Internationale Veröffentlichungsnummer: WO9012439

(56) Entgegenhaltungen:
- EP-A- 0 222 727
- DE-A- 242 716
- DE-A- 1 591 680
- DE-A- 2 530 047
- DE-A- 2 735 736
- US-A- 3 925 688

## Beschreibung

Die Erfindung betrifft eine Vorrichtung zur Wechselstrom-Einschaltbegrenzung eines mit einem ersten Wechselstromschalter in Reihe geschalteten induktivitätsbehafteten Stromversorgungsgerätes mit einer Phasenanschnittschaltung, durch die die Verbindung der Primärwicklung mit der Netzwechselspannung ab dem Einschaltmoment verzögerbar ist, wobei eine Steuerelektrode des ersten Wechselstromschalters der versorgungsspannungsgepufferten Phasenanschnittschaltung mit dem Ausgang einer Steuerschaltung verbunden ist, durch die beim Einschalten des Stromversorgungsgerätes bei einer voreinstellbaren Phasenlage der Netzwechselspannung eine mit dieser synchronisierte Zündspannung erzeugbar ist, die zum Ausschalten des Stromversorgungsgerätes rechtzeitig vor Erreichen eines Nulldurchgangs der Netzwechselspannung unterdrückbar ist.

Eine solche Vorrichtung zur Wechselstrom-Einschaltbegrenzung ist aus der DE 27 35 736 A1 bekannt, mit der Schaltstörungen während eines Takt-Schaltbetriebes vermeidbar sind. indem eine einseitig gerichtete Vormagnetisierung des ferromagnetischen Materials der Last beseitigt wird. Mit dieser Vorrichtung ist es jedoch nicht möglich, ein induktivitätsbehaftetes Stromversorgungsgerät nach einem Ausfall der Netzspannung schnell wieder zuzuschalten, da bei einem solchen Spannungsausfall eine unkontrollierte Remanenz zurückbleibt.

Die DE 25 30 047 A1 lehrt eine Vorrichtung zum Anschalten von Transformatoren, bei der unmittelbar vor dem Einschalten eines Transformators eine remanente Vormagnetisierung entgegen der durch den Einschaltvorgang gegebenen Magnetisierung durch einen Gleichstrom erzeugbar ist. Dieser ist durch einen definierten Stoß aus einer Kondensatorbatterie erzeugbar und überlagert die erste Halbschwingung der Wechselspannung.

In der EP 0 222 727 A1 ist eine Einrichtung zum Minimieren von Netzrückwirkungen bei induktiven Elementen in einem Hochspannungsnetz beschrieben, bei der andere Einschaltzeitpunkte des induktivitätsbehaftetes Stromversorgungsgerät als im Spannungsmaximum bzw. Stromnulldurchgang gewählt werden, wobei Wechselstromschalter in Gestalt von Triacs eingesetzt werden.

Eine weitere Vorrichtung zur Wechselstrom-Einschaltbegrenzung ist aus dem ELV Journal 45, Seite 1 bis 4 bekannt. Bei Transformatoren mit einem Eisenkern, insbesondere bei Ringkerntransformatoren, die an das 220 Volt Wechselspannungsnetz angeschlossen werden, ist der Einschalt- bzw. Anlaufstrom, auch Inrush genannt im Moment des Einschaltens um ein Vielfaches höher als der Nennstrom. Dies führt häufig zum Durchbrennen der jeweils vorgesehenen Gerätesicherung ohne offensichtlichen Grund, sowie zu Störungen benachbarter Geräte. Außerdem erfordern die Einschaltstromspitzen eine Überdimensionierung mancher Bauteile oder gar des Transformators selbst, wodurch sich höhere Kosten und/oder größere Bauvolumina ergeben.

Eine ähnliche Schaltungsanordnung zur Begrenzung des Einschaltstromstoßes ist aus der DE-OS 1 591 680 bekannt, bei der ein Triac parallel zu einem Vorwiderstand in dem Primärkreis eines Transformators vorgesehen ist. Durch den Nebenwiderstand wird beim einschalten ein großer Stromfluß verhindert und erst nach einer Wartezeit von 0,1 bis 0,2 Sekunden zündet der Triac über einen zwischenzeitlich aufgeladenen Kondensator. Diese Vorrichtung erfaßt nicht die Remanenz-Richtung des Transformators, die durch das Ausschalten aufgeprägt wurde. Sie weist ferner den Nachteil auf, daß bei häufigem Ein- und Ausschalten sich über den zu Beginn fließenden Strom die Remanenz des Transformators im Ruhezustand immer mehr in die Sättigung verschiebt, so daß der sich über aufeinanderfolgende Nulldurchgänge aufsummierende Einschaltspitzenstrom nicht abklingt. Dabei erwärmt sich auch der Nebenwiderstand immer mehr.

Aus der DE-PS 27 46 845 ist eine weitere Einrichtung zur Wechselstrom-Einschaltbegrenzung bekannt, bei der mit ständigem Phasenanschnitt während einer Startzeit die Durchlaßwinkel der Spannung von kleinen Werten zu großen hin langsam verschoben werden. Hierbei treten während des Einschaltvorganges weit über den Nennstrom hinausgehende Einschaltstromspitzen auf, weil die Remanenz-Polarität und Spannungspolarität beim Einschalten nicht berücksichtigt wird.

Aus der DE-OS 24 24 716 ist schließlich eine Anordnung zur Unterdrückung des Einschaltstromstoßes von Transformatoren bekannt, bei der bei der Konstruktion des Transformators in dem Transformatorkern an mindestens einer, vorzugsweise an mehreren Stellen Hall-Sonden eingebaut sind, um kontinuierlich den Remanenzfluß zu messen. Die iuschalteinrichtung wird in dem Moment eingeschaltet, wenn der Augenblickswert des oben genannten Summenflusses aus Erregerfluß und Remanenzfluß im Bereich des Wertes Null liegt. Diese Anordnung weist den Nachteil auf, daß sie nur bei großen Transformatoren, z.B. bei in Lokomotiven eingebauten Transformatoren, insbesondere aus Kostengründen, anwendbar ist und daß diese Anordnung bei der Konstruktion des Transformators vorgesehen und eingebaut werden muß. Ein nachträglicher Einbau in bestehende Systeme ist nicht möglich.

Ausgehend von diesem Stand der Technik liegt der Erfindung die Aufgabe zugrunde, eine Vorrichtung der eingangs genannten Art zu schaffen, die es ohne konstruktiven Eingriff in ein Stromversorgungsgerät gestattet, die volle Leistung ohne merkliche Verzögerung nach dem Einschalten dem Stromversorgungsgerät zur Verfügung zu stellen und störende Einschaltstromspitzen dennoch sicher zur unterdrücken.

Diese Aufgabe wird erfindungsgemäß dadurch gelöst, daß eine Kapazität parallel zu dem induktivitätsbehafteten Stromversorgungsgerät vorgesehen ist, wobei die Kapazität in Reihe mit einer Parallelschaltung aus einem zweiten Wechselstromschalter und einer Reihenanordnung von einem Ladewiderstand und Gleichrichter angeordnet ist, daß der zweite Wechselstromschalter einige Millisekunden nach einem Ausschalten bzw. Ausfall der Netzwechselspannung von einer Netz-aus-Erkennungsschaltung zündbar ist, so daß die Kapazität die Remanenz des Stromversorgungsgerätes nach dem Ausschalten definiert setzt, daß das Stromversorgungsgerät bei einer voreinstellbaren Phasenlage zwischen 90 und 0 Grad vor einem Nulldurchgang der Netzwechselspannung zuschaltbar ist, und daß die Zündspannung des ersten Wechselstromschalters zum Ausschalten des Stromversorgungsgerätes bei einem gleichartigen Nulldurchgang rechtzeitig vor Erreichen dieses Nulldurchgangs unterdrückbar ist.

Dadurch, daß eine Kapazität parallel zu dem induktivitätsbehafteten Stromversorgungsgerät geschaltet ist, ist die Remanenz des Stromversorgungsgerätes nach dessen Ausschalten bzw. Ausfall definiert setzbar. Die Kapazität befindet sich in Reihenschaltung mit einem zweiten Wechselstromschalter, zu dem ein Ladewiderstand und eine Gleichrichterdiode parallel geschaltet sind. Dieser zweite Wechselschalter wird einige Millisekunden nach dem absichtlichen oder zufälligen Ausschalten der Netzwechselspannung von einer Netz-aus-Erkennungsschaltung gezündet, so daß durch den Fluß der durch die in der Kapazität gespeicherten Ladung im Transformator die Remanenz des Stromversorgungsgerätes erzeugt wird.

Die Kapazität ist über die Gleichrichterdiode und den Ladewiderstand parallel zu dem Stromversorgungsgerät geschaltet, so daß sie sich während den Betriebszeiten des Gerätes auflädt. Vorzugsweise beträgt die Zeitkonstante des aus der Kapazität und dem Ladewiderstand gebildeten Zeitgliedes weniger als das 1,5fache der Periodendauer der Netzwechselspannung. Die parallel zu dem Stromversorgungsgerät geschaltete Kapazität gestattet ein definiertes Setzen der Remanenz des Transformatois vor jedem Einschalten, so daß das Stromversorgungsgerät immer und zu allen Bedingungen ohne einen über den Laststrom hinausgehenden Einschaltspitzenstrom einschaltbar ist.

Die erfindungsgemäße Vorrichtung kann auch bei einem Drehstromversorgungsgerät eingesetzt werden, wobei ein dritter Stromschalter zwischen einem der besagten zwei Anschlüsse des Stromversorgungsgerätes und einem weiteren Anschluß des Stromversorgungsgerätes angeschlossen ist. Die Steuerelektrode dieses dritten Wechselstromschalters ist ebenfalls mit dem Ausgang der Phasenanschnittschaltung verbunden.

Weitere vorteilhafte Ausgestaltungen der Erfindung sind in den Unteransprüchen gekennzeichnet.

Nachfolgend werden Ausführungsbeispiele der Erfindung anhand der Zeichnungen beispielhaft näher erläutert. Es zeigen:
Fig. 1 Signalkurven der Netzspannung sowie des Netzstromes bei dem Einschalten eines Transformators im Leerlauf,
Fig. 2 ein Blockschaltbild einer Vorrichtung zum Begrenzen der Einschaltstromspitzen in der Primärwicklung eines Transformators,
Fig. 3 Verläufe von Spannungssignalen und Stromsignalen bei Einschaltvorgängen an Transformatoren im Leerlauf.
Fig. 4 einen Einschaltvorgang des Transformators beim Leerlauf,
Fig. 5 das Setzen der Remanenz bei einer willkürlich bzw. zufällig ausgeschalteten Netzspannung 7,
Fig. 6 Signalverläufe bei der erstmaligen Inbetriebnahme des Transformators mit anschließendem Pulsbetrieb, und
Fig. 7 eine Vorrichtung zur Einschaltstrombegrenzung beim Einsatz eines Drehstromversorgungsgerätes.

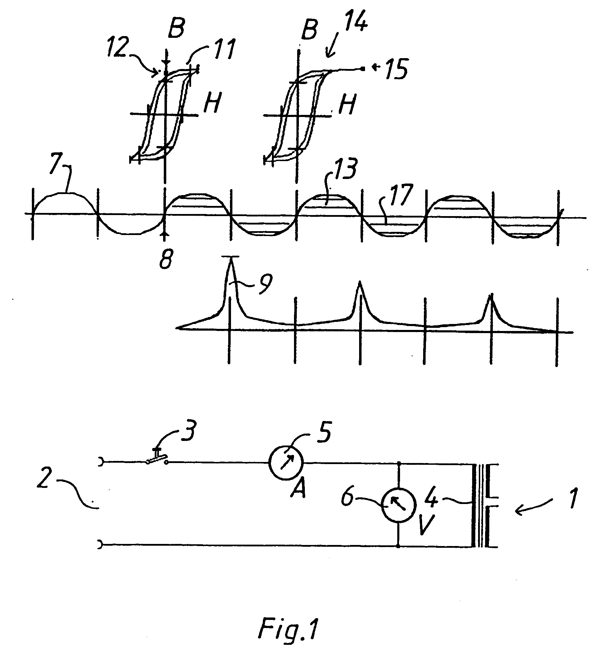

Die Fig. 1 zeigt Signalkurven der Netzspannung sowie des Netzstromes bei dem Einschalten eines Transformators 1 im Leerlauf. Ein Transformator 1, der ein mögliches Stromversorgungsgerät darstellt, ist an eine Netzspannung 2 angeschlossen. Mit einem Schalter 3 ist die Spannung auf die Primärwicklung 4 des Transformators 1 schaltbar, wobei der im Primärkreis fließende Strom durch ein Strommeßgerät 5 und die Spannung an der Primärseite 4 des Transformators 1 durch ein Spannungsmeßgerät 6 erfaßbar ist.

Die Fig. 1 stellt den Spannungsverlauf der Netzspannung im Primärkreis dar, wobei zu dem Zeitpunkt 8 der Netzschalter 3 geschlossen wird. Die Kurve 9 zeigt den daraufhin erfolgenden wertmäßigen Verlauf des Stromflusses auf der Primärseite 4 des Transformators 1 beim Leerlaufbetrieb desselben.

Bei dem in der Zeichnung dargestellten Fall liegt eine bestimmte Remanenz des Transformators 1 vor, die in der Hysteresekurve 11 des Transformators 1 durch den Punkt 12 dargestellt ist. Die Hysteresekurve 11 zeigt die Abhängigkeit der Feldstärke H im Eisen von der Induktionsdichte B. Die Remanenz 12 des Transformators 1 ist in dem in Fig. 1 dargestellten Fall positiv. Der Netzschalter 3 ist im ungünstigsten Fall, nämlich zum Zeitpunkt 8 bei einem Nulldurchgang mit positiver Steigung, d. h. in eine positive Halbwelle 13 hinein eingeschaltet. Dadurch wird der Transformator in dem Induktionsdichte-Feldstärke-Diagramm 14 in die positive Sättigung 15 getrieben und es ergeben sich hohe Inrushströme 9, die z.B. bei einem 400 VA-Transformator bis zu 150 Ampère groß sein können. Diese Ströme verringern sich bei anschließenden gleichartigen Nulldurchgängen, soweit nicht eine Sicherung des Schaltkreises anspricht, mit einer abfallenden Exponentialfunktion. Dieselbe Situation mit entsprechendem negativem Inrushstrom würde sich beim Einschalten des Transformators bei einer negativen Remanenz und beim Nulldurchgang in eine negative Einschalthalbwelle 17 ergeben.

In der Fig. 1 und in den nachfolgend beschriebenen Zeichnungen kennzeichnen schraffierte Halbwellen 13 und 17, daß zu diesen Zeitpunkten der Schalter 3 oder entsprechende Netz-Ein-Hauptschalter die Primärseite des Transformators 1 mit Spannung beaufschlagen. Die ohne Unterschraffur gezeichneten Halbwellen beschreiben den Phasenverlauf der weiterlaufenden Netzwechselspannung, ohne daß diese das Stromversorgungsgerät beaufschlagt.

Der gezeichnete Fall tritt dann ein, wenn der Transformator 1 gegen Ende einer Netzspannungshalbwelle ausgeschaltet wird, so daß das Transformatoreisen stark remanent polarisiert wird. Die Polarität der Remanenz ist dabei abhängig von der Polarität der letzten Netzhalbwelle 13 oder 17 vor dem Ausschalten.

Der in der Fig. 1 dargestellte ungünstige Einschaltvorgang tritt gerade bei Halbleiterrelais auf, da diese immer zu Beginn einer Netzhalbwelle einschalten und zum Ende einer Netz-Halbwelle ausschalten, wobei die Wahrscheinlichkeit gerade 50 % beträgt, daß mit Halbwellen gleicher Polarität ein- und ausgeschaltet wird. Halbleiterrelais weisen aber im allgemeinen Vorteile zum Schalten von Lasten, z.B. auch von Transformatoren, auf, so daß diese immer häufiger angewendet werden. Die im folgenden beschriebene Vorrichtung, die im Gerät zwischen dem Netzeingang 2 und dem Transformator 1 fest eingebaut wird, vermindert in eindrucksvoller Weise solche Eingangsstromspitzen.

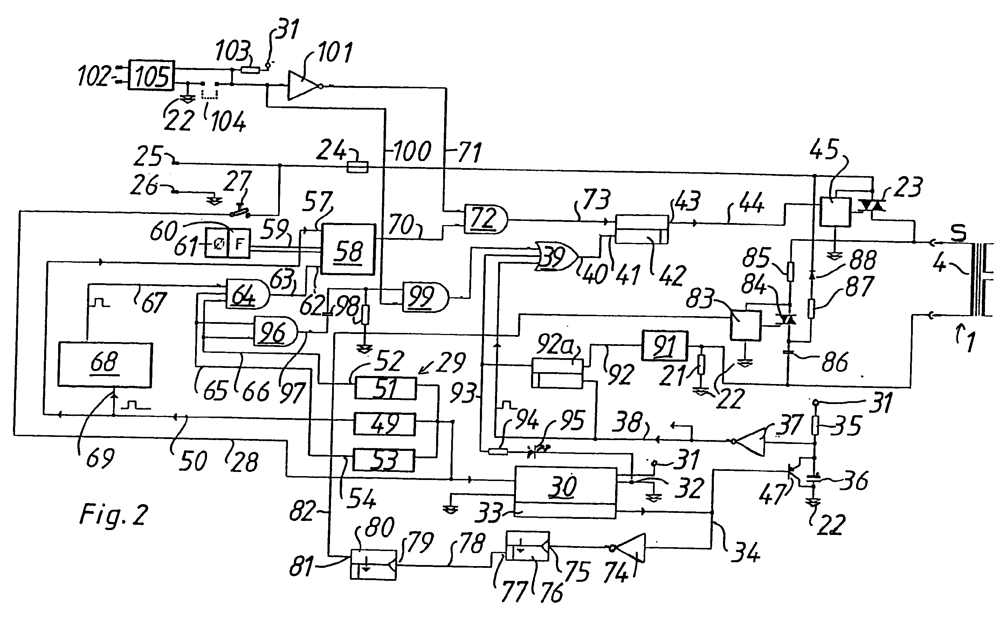

Die Fig. 2 zeigt ein Blockschaltbild einer Vorrichtung zum Begrenzen der Einschaltstromspitzen in der Primärwicklung 4 eines Transformators 1. Der sekundärseitig mit einer Last verbundene Transformator 1 verfügt über eine Primärwicklung 4, die mit ihrem einen Ende über einen Meßshunt 21 mit Schaltungsmasse 22 verbunden ist. Der andere Abgriff der Primärseite des Transformators 1 ist über ein erstes Triac 23 und über eine Lastsicherung 24 von z.B. 24 A mit einem Steckkontakt 25 zum Anschluß der Netz-Wechselspannung, insbesondere einer Netz-Wechselspannung von 22 Volt und 50 Hertz verbunden.

Anstelle eines Transformators 1 kann ein beliebiges anderes Wechselstrom-Versorgungsgerät angeschaltet sein, das mit einer Induktivität behaftet ist. Als Wechselstromschalter können neben Triacs z.B. auch Thyristoren oder andere Halbleiter-Schalter verwendet werden.

Der zweite Steckkontakt 26 ist mit Schaltungsmasse 22 verbunden. Die Netzspannung beaufschlagt über einen Geräte-Ein-/Ausschalter 27 und eine Leitung 28 die Eingänge einer Synchronisierschaltung 29 und ein Netzteil 30, das ausgangsseitig an einem Anschluß 31 eine Betriebsspannung V_{CC} zur Verfügung stellt, wobei ein zweiter Anschluß 32 mit Schaltungsmasse 22 verbunden ist. Das Netzteil 30 weist eine Puffer-Kapazität auf, so daß die Versorgungsspannung V_{CC} auch noch für 200 Millisekunden nach Netz-aus zur Versorgung der elektronischen Komponenten der Schaltung zur Verfügung steht. Das Netzteil 30 verfügt über einen Schaltkreis 33 zur schnellen Netzauserkennung, der es gestattet, das Öffnen des Hauptschalters 27 zu erkennen und über eine Signalleitung 34 ein Aussignal abzugeben, das beim Öffnen des Steuerschalters 27 vom logischen Pegel 1 auf den logischen Pegel 0 fällt. Durch die Puffer-Kapazität von 200 Millisekunden nach dem Öffnen des Hauptschalters 27 sind die elektronischen Komponenten noch für z.B. 10 Perioden der Netzwechselspannung mit ausreichender Betriebsspannung versorgt. Je nach Verzögerungszeit der nachfolgend beschriebenen Schaltkreise können auch 5 Perioden gepufferte Spannungsversorgung ausreichend sein.

Nach dem Schließen des Hauptschalters 27 liefert das Netzteil 30 die für die in der Zeichnung dargestellten Komponenten erforderliche Betriebsspannung, die über einen Vorwiderstand 35 einen Verzögerungskondensator 36 auflädt. Die am Verzögerungskondensator 36 nach dem Einschaltens des Hauptschalters 27 ansteigende Spannung steuert einen Inverter 37, an dessen Ausgang mit dem ersten Eingang 38 eines ODER-Gatters 39 verbunden ist. Der Ausgang 40 des ODER-Gatters 39 ist mit dem Rücksetzeingang 41 eines Flip-Flops 42 verbunden, so daß dieses nach dem Betätigen des Steuerschalters 27 so lange an seinem Ausgang 43 auf dem logischen Pegel 0 gehalten wird, bis die Spannung am Verzögerungskondensator 36 nach etwa 0,1 Sekunden einen Wert erreicht hat, der zum Umschalten des Inverters 37 führt. Am Ausgang 43 des Flip-Flops 42 liegt somit, dank der oben beschriebenen Rücksetzschaltung ein Null-Signal an, so daß die mit dem Ausgang 43 des Flip-Flops 42 verbundene Zündleitung 44 des Optokopplers 45 spannungslos ist, so daß der durch den Optokoppler 45 angesteuerte Triac 23 ebenso spannungslos ist und ein Zünden des Triacs 23 beim Einschalten des Hauptschalters 27 sicher verhindert wird.

Die schnelle Netzauserkennung 33 ist über die Leitung 34 mit einem pnp-Transistor 47 verbunden, der parallel zu dem Kondensator 36 angeordnet ist. Bei einem Umlegen des Hauptschalters 27 in die Ausstellung entlädt daher der Transistor 47 den Kondensator 36, so daß das Flip-Flop 42 sich sperrt und damit der Ein-/Ausschalt-Triac 23 nicht gezündet werden kann. Vor allem ist so der Verzögerungskondensator 36 entleert und kann beim Einschalten des Hauptschalters 27 erneut die Einschaltverzögerung bewirken.

Wenn durch Betätigen des Hauptschalters 27 das Netzteil 30 mit der Netzwechselspannung beaufschlagt wird, erhalten alle Komponenten der in der Zeichnung dargestellten Schaltung, insbesondere die Synchronisiereinrichtung 29, ihre Betriebsgleichspannung. Die Synchronisiereinrichtung 29 verfügt über einen Nulldurchgangserkennungsschaltkreis 49, der an seinem Ausgang 50 bei einer Netzfrequenz von 50 Hertz alle 10 Millisekunden einen kurzen Nulldurchgangsimpuls bereitstellt. In einem ersten Halbwellenerkennungsschaltkreis 51 wird an dem Ausgang 52 ein positives Signal für jeweils die zweite Hälfte einer jeden Halbwelle zur Verfügung gestellt. Dies entspricht einem Phasenwinkel zwischen 0° und 90° sowie zwischen 270° und 360°, wobei letzterer Bereich auch mit -90° bis 0° bezeichnet werden kann.

An einem zweiten Halbwellenerkennungsschaltkreis 53 wird an seinem Ausgang 54 ein positiver Impuls bereitgestellt, durch den die negativen Halbwellen der Netzwechselspannung gekennzeichnet sind. Somit ist durch den Halbwellenerkennungsschaltkreis 53 der phasenwinkelbereich zwischen 180° und 360° der Netzwechselspannung markiert.

Die am Ausgang 50 des Nulldurchgangserkennungsschaltkreises 49 vorhandenen Impulse gelangen über die Leitung 50 zum Setzeingang 57 eines Rückwärts-Zählers 58 mit einer Auflösung von beispielsweise 10 Bit. Beim Auftreten eines Impulses am Setzeingang 57 übernimmt der Rückwärts-Zähler 58 die über einen Bus 59 zugeführte 8-Bit Startzahl 60. Der Bus 59 übermittelt das Ausgangssignal eines Vorlaufwinkelschaltkreises 61, der im einfachsten Fall aus einer Schalteranordnung zum Einstellen einer Hexadezimalzahl besteht, die als Startzahl in den Rückwärts-Zähler 58 übernommen werden soll. Der Vorlaufwinkelschaltkreis 60 kann jedoch auch so ausgebildet sein, daß er anstatt einer zuvor eingestellten Zahl eine berechnete oder im Rahmen einer adaptiven Nachführung ermittelte Zahl überliefert. Im einfachsten Fall entspricht ein Wert von OO_{Hex} einem Winkel von 270° und eine Zahl von FF_{Hex} einem Winkel von 360°, so daß ein Phasenwinkelbereich von -90° bis 0° vor dem Auftreten eines Nulldurchgangs als Startwert in dem Rückwärts-Zähler 58 eingespeist werden kann.

Der Taktpulseingang 62 des Rückwärts-Zähler 58 ist mit dem Ausgang 63 eines UND-Gatters 64 verbunden, dessen erster Eingang 65 mit dem am Ausgang 54 auftretenden und den negativen Halbwellen zugeordneten Impulsen beaufschlagt ist. Weiterhin ist der zweite Eingang 66 des UND-Gatters 64 mit den die zweite Hälfte einer jeden Halbwelle kennzeichnenden Impulsen 52 beaufschlagt.

Sobald daher die Netzwechselspannung nach dem Einschalten der Betriebsspannung durch Schließen des Hauptschalters 27 eine negative Halbwelle in ihrem aufsteigendem Ast hat, d. h. sich in dem Winkelbereich von -90° bis 0° vor einem aufsteigenden Nulldurchgang befindet, wird das UND-Gatter 64 über die mit dem ersten und zweiten Eingang 65 und 66 verbundene Leitungen 52 und 54 geöffnet, so daß die am dritten Eingang 67 anliegenden Taktimpulse eines Taktgebers 68 zum Taktpulseingang 62 des Rückwärts-Zählers 58 durchgeschaltet werden. Der Taktgeber 68 ist phasenstarr mit der Netzwechselspannung synchronisiert und verfügt dazu über einen Synchronisiereingang 69, der alle 10 Millisekunden mit einem etwa 0,5 Millisekunden dauernden Impuls aus dem Nulldurchgangserkennungsschaltkreis 49 beaufschlagt wird.

Der Taktgeber 68 hat eine Frequenz von 102,40 Kilohertz, die so gewählt ist, daß der Rückwärts-Zähler 58 je nach der am Bus 59 anliegenden Hexadezimalzahl innerhalb der zweiten Hälfte der negativen Halbwelle der Netzwechselspannung an seinem Ausgang 70 ein dem Zählerstand 00 zugeordneten Nullimpuls liefert.

Die Leitung 70 ist zusammen mit der beim üblichen Betrieb ein logisch Eins-Signal tragenden Leitung 71 mit den Eingängen eines UND-Gatters 72 verbunden, so daß der an dem Ausgang 70 anliegende Nullimpuls den Setzeingang 73 des Flip-Flops 42 beaufschlagt. Synchron zur zweiten Hälfte der negativen Halbwelle der Netzwechselspannung nimmt entsprechend der Einstellung durch den Vorlaufwinkelschaltkreis 60 das Ausgangssignal am Ausgang 43 den logischen Pegel 1 an und dadurch tritt auf der Zündleitung 44 ein Zündsignal auf, durch das der durch den Optokoppler 45 zündbare Triac 23 bei einer Phasenlage zwischen -90° und 0° vor dem Durchgang einer positiven Nullstelle eingeschaltet wird. Der auf diese Weise eingestellte Zündwinkel ist so gewählt, daß die Einschaltstromspitzen in der Primärwicklung 4 des Transformators 1 minimal sind und den Betriebsstromspitzen im wesentlichen entsprechen. Daher wird vorausgesetzt, daß der Transformator 1 bei einem früheren Einsatz genau bei einem Phasenwinkel von 0°, d.h. beim Ende einer negativen Halbwelle, vom Netz getrennt worden ist und der Eisenkern des Transformators 2 die zugeordnete magnetische Remanenz beibehalten hat. Eine weitere Voraussetzung ist, daß der Transformator 1 im selben Sinn an die Schaltung angeschlossen ist wie beim Ausschalten.

Wenn das Trennen der Primärwicklung 4 zu einem anderen Zeitpunkt, insbesondere bei einem Phasenwinkel von 180° erfolgte, ergibt sich aus den obigen Ausführungen, daß bei einem solchen Fall das erneute Verbinden der Primärwicklung mit der Netzwechselspannung bei einem Phasenwinkel zwischen 90° und 180° vorgenommen wird.

Nachfolgend werden diejenigen Komponenten der in der Zeichnung dargestellten Schaltung beschrieben, die beim Abschalten des Transformators 1 und damit beim Abschalten der Last wirksam sind.

Bei einem Ausschalten des Steuerschalters 27 zu einem beliebigen Zeitpunkt bzw. bei einem Zusammenbruch der Netzwechselspannung aus äußeren Gründen, liefert die schnelle Netzauserkennung 33 auf ihrer Leitung 34 ein Pegel Null-Signal, das in dem Inverter 74 ein Pegel Eins-Signal 75 erzeugt, welches den Eingang 76 eines ersten Verzögerungsgliedes 77 beaufschlagt. An dessen invertiertem Ausgang 78 tritt nach z.B. 30 Millisekunden das verzögerte Netzaussignal auf, das den Steuereingang 79 eines zweiten Verzögerungsgliedes 80 beaufschlagt. An dessen Ausgang 81 liegt dann z.B. für eine Dauer von 50 Millisekunden gemäß der oben beschriebenen Verzögerung des Netz-Aus-Zustandes ein Pegel Eins-Signal an, das über die Leitung 82 einen Optokoppler 83 beaufschlagt, der einen Setz-Triac oder Thyristor 84 zündet. Der Setz-Triac 84 ist in Reihe mit einem Strombegrenzungswiderstand 85 und einem Speicherkondensator 86 zu der Primärwicklung 4 des Transformators geschaltet. Über den Strombegrenzungswiderstand 85 entlädt sich somit der Speicherkondensator 86 und setzt für den Transformator 1 eine vorbestimmte Remanenz, so daß das nachfolgende Einschalten des Transformators 1 von einem vorbestimmten Zustand ausgeht.

Der Speicherkondensator 86 mit einer Kapazität von z.B. 100 Mikrofarad wird über einen Ladewiderstand 87 und eine Gleichrichterdiode 88 oder über durch das Signal 75 gesteuerten Gleichrichter (Thyristor) an den Netzstecker 25 und über den Meßshunt 21 an die Schaltungsmasse 22 angeschlossen. Dadurch wird der Speicherkondensator 86 selbst in dem Falle geladen, wenn der Schalttriac 23 stromlos und der Hauptschalter 27 ausgeschaltet und nicht-leitend ist.

Bei einem ersten Einschalten des z.B. fabrikneuen Transformators 1 ist der Speicherkondensator 86 entladen, so daß in der Primärwicklung des Transformators 1 ein großer Strom durch den Meßshunt 21 fließen kann. Ein Komparator 91 mißt die über dem Meßshunt 21 abfallende Spannung, errechnet den primärseitig fließenden Strom und gibt z.B. bei einem Strom von 30 A ein Pegel Eins-Signal auf seiner Überstrom-Ausgangsleitung 92 ab, welches ein Überstrom-Flip-Flop 92a setzt. Auf dessen Ausgangsleitung 93 liegt somit bei Auftreten eines Überstromes ein Pegel Eins-Signal an, das über einen Schutzwiderstand 94 eine Leuchtdiode 95 als Hinweislampe erleuchten läßt. Weiterhin liegt das Pegel-Eins-Signal an dem ODER-Gatter 39 an, das das Setz-Flip-Flop 42 zurücksetzt, so daß der Triac 23 beim nächsten Nulldurchgang der Netzspannung sicher gesperrt wird.

Während der Verzögerungszeit des Kondensator 36 und danach wird der Speicherkondensator 86 aufgeladen, der als Zeitglied mit dem Ladewiderstand 87 vorzugsweise eine Zeitkonstante von kleiner als dem anderthalbfachen der Periodendauer der Netzwechselspannung hat.

Die hier beschriebene Schaltung kann zudem durch die nun im folgenden beschriebenen Erweiterungen z.B. als Heizungsregler eingesetzt werden, wobei die Heizleistung über die Anzahl der angeschalteten Vollwellen im Verhältnis zu der Anzahl der ausgeschalteten Vollwellen geregelt wird.

Das an der Synchronisierschaltung 29 über die Leitung 65 und 66 ausgegebene Signal beaufschlagt ein weiteres UND-Gatter 96, an dessen Ausgang 97 ein Signal während der zweite Hälfte einer negativen Halbwelle anliegt, d.h. im aufsteigenden Ast vor einem Nulldurchgang in eine positive Halbwelle 13. Dieses Signal wird über das RC-Glied 98 in einen Spannungsimpuls umgewandelt, der an einem weiteren UND-Gatter 99 anliegt. Somit wird das Triac 23 über das ODER-Gatter 39 und das Setz-Flip-Flop 42 genau dann gesperrt, wenn auf der zweiten Leitung 100 des UND-Gatters 99 während der zweiten Hälfte der negativen Halbwelle ein Pegel Eins-Signal anliegt. Ein Aus-Signal am Stecker 102 wird somit synchronisiert, um die Remanenz des Transformators 1 richtig zu setzen.

Ein Pegel Null-Signal auf der Leitung 100 führt über den Inverter 101 zu einem Pegel Eins-Signal auf der Leitung 71, so daß das UND-Gatter 72 durchschaltet, damit der Rückwärts-Zähler 58 zum Anschnittwinkel ein Pegel Eins-Signal ausgibt. Ein Eins-Signal am Stecker 102 wird somit synchronisiert, um den Transformator 1 seiner Remanenz entsprechend richtig einzuschalten.

Vorteilhafterweise wird ein Optokoppler 105 über Steckkontakt 102 von dem Heizungsregler mit den vorbestimmten Impulsen beschaltet. Die Ausgänge des Optokopplers 105 sind zum einen über einen Widerstand 103 an die Versorgungsspannung 31 und zum anderen an Schaltungsmasse 22 angeschlossen. Dadurch wird der an den Optokoppler 105 übermittelte Takt an die Gatter 72 und 99 übertragen, so daß im Wechsel von maximal der Hälfte der Frequenz der Netzwechselspannung das Stromversorgungsgerät 1 an- und ausgeschaltet wird.

Diese externe Regelung kann durch eine Brücke 104 überbrückt werden, so daß immer ein Null-Signal gemäß der Schaltungsmasse 22 auf der Leitung 100 anliegt, so daß das UND-Gatter 99 immer sperrt und das UND-Gatter 72 entsprechend seinem zweiten Eingang durchschaltet. Damit wird das Stromversorgungsgerät alleine mit dem Hauptschalter 27 aus- und eingeschaltet.

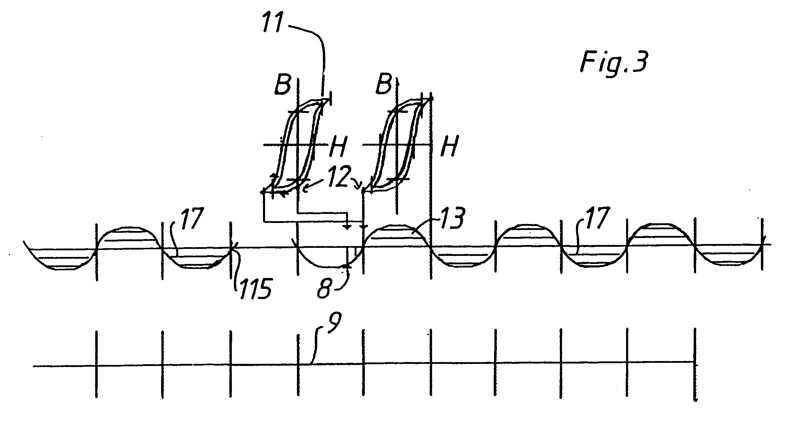

Die Fig. 3 zeigt Verläufe von Spannungssignalen und Stromsignalen bei Einschaltvorgängen an Transformatoren 1 im Leerlauf. Der Transformator 1 wird nach Beendigung einer negativen Halbwelle 17 entsprechend dem schraffierten Abschnitt der Kurve 7 der Netzspannung ausgeschaltet. Damit befindet sich die Remanenz 12 in einem definierten negativen Zustand, der durch den Einschaltpunkt 8 und den Anschnittwinkel zwischen -90° und 0° in der Hysteresekurve 11 derart verschoben wird, daß beim Strom im Primärschaltkreis kein über den Leerlaufstrom hinausgehender Einschaltstrom auftritt. Dies gilt auch für alle weiteren voll angeschalteten positiven und negativen Halbwellen 13 und 17.

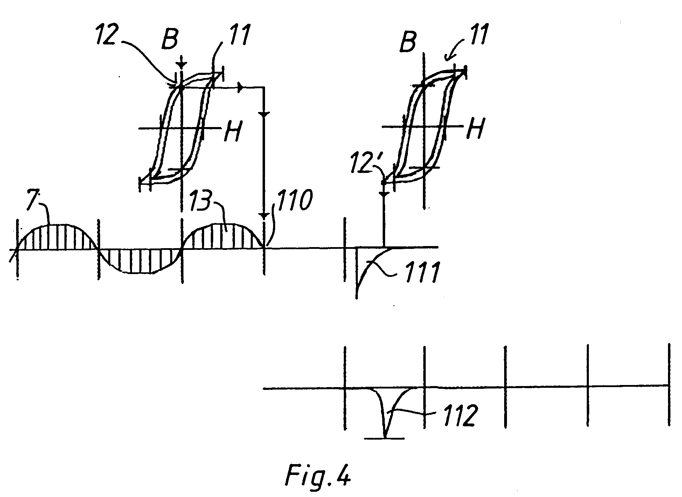

Die Fig. 4 zeigt den Einschaltvorgang am Transformator 1 beim Leerlauf, wenn die Netzspannung 7 bei Beendigung einer positiven Halbwelle 13 ausgeschaltet wird, so daß in der Hysteresekurve 11 die Remanenz 12 in einem bestimmten positiven Zustand gesetzt ist. Zur definierten Einschaltung mit Hilfe der in Fig. 2 beschriebenen Anlaufsteuerung mit einem vorbestimmten Anschnittwinkel in der negativen Halbwelle 17 muß die Remanenz in der Hysteresekurve 11 auf den Punkt 12′ gesetzt werden. Dies geschieht in der Schaltung gemäß der Fig. 2 durch das Entladen des Speicherkondensator 86, welches nach einer Verzögerungszeit, die durch das Verzögerungsglied 77 vorgegeben ist, stattfindet. Dementsprechend gibt der mit 110 bezeichnete Zeitabschnitt die Verzögerungsdauer des Verzögerungsgliedes 77 wieder. Nach dieser Zeit findet eine Entladung des Kondensators 86 statt, dessen Ladungsspannung entsprechend einer Exponentialkurve 111 abfällt und einen Transformatorstrom 112 hervorruft, der den Transformator 1 in eine vorbestimmte negative Remanenz 12′ setzt.

Bei der Kurve 112 handelt es sich um den Transformatorstrom, der in Abwesenheit des Netzstromes durch die Entladung des Kondensators 86 auftritt. Weil der Transformatorstrom 112 nicht vom Netz entnommen wird, stört er dieses auch nicht.

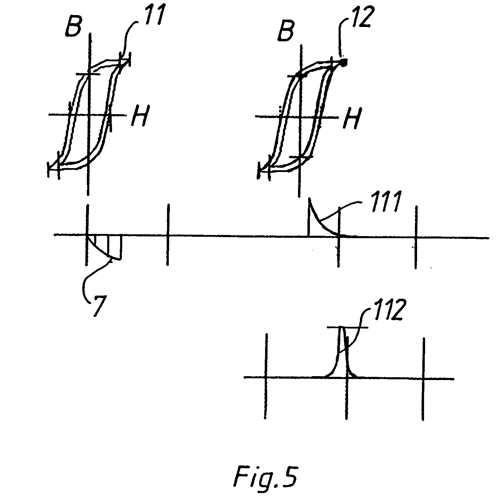

Die Fig. 5 zeigt das Setzen der Remanenz bei einer willkürlich bzw. zufällig ausgeschalteten Netzspannung 7. Dann ist die Remanenz in der Hysteresekurve 11 undefiniert. Und mit der Entladung des Kondensators 86 tritt eine Entladespannung 111 auf, die mit einem Entladestrom 112 verbunden ist, der größer als der Nennstrom des Transformators sein muß, wenn der Transformator 1 belastet ist. In Abhängigkeit von der möglichen Last des Transformators 1 ist somit die Größe der Kapazität des Kondensators 86 vorherzubestimmen.

Die Fig. 5 zeigt den Fall des definierten Setzens der Remanenz entsprechend einer nicht in der Schaltung der Fig. 2 beschriebenen Polung. Hier wird die Remanenz positiv gesetzt und der in der Fig. 5 nicht dargestellte Anschnittwinkel liegt zwischen 90° und 180°.

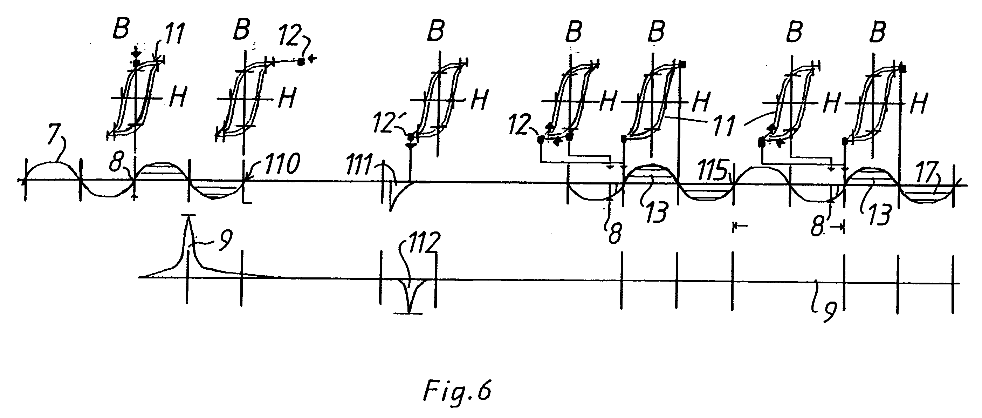

Die Fig. 6 zeigt Signalverläufe bei der erstmaligen Inbetriebnahme des Transformators 1 mit anschließendem Pulsbetrieb. Die Netzspannung 7 wird zu einem Zeitpunkt 8, der auch mit einem Anschnittwinkel vorgegeben sein kann, eingeschaltet, wobei ein großer Inrush 9 auftritt, so daß das Netz nach einer Halb- oder Vollwelle mit der Transformator-Remanenz in positiver Sättigung 12 ausgeschaltet wird. Durch den nun sich entladenden Kondensator 86 wird mit einem Ladestrom 112 die Remanenz negativ gesetzt, so daß zu einem beliebigen Zeitpunkt danach die Halbwellen 13 und 17 eingeschaltet werden können. In der Fig. 6 ist anschließend der Betrieb eines Heizstellers gezeichnet, der mit einer Frequenz von 25 Hertz ein- und ausgeschaltet wird. Das bedeutet, daß nach einem positiven Nulldurchgang 115 eine fast komplette Vollwelle vergeht, bevor mit demselben Anschnittwinkel 8 die nächste Vollwelle 13 und 17 eingeschaltet wird. Nach dem nur einmalig bei der allerersten Inbetriebnahme auftretenden Inrushstrom 9 und dem Ladestrom 112, der z.B. 2 A betragen kann, tritt kein Einschaltstrom mehr auf, so daß nur der Laststrom die Sicherung 24 belastet.

Bei einer in der Polung umgekehrt aufgebauten Vorrichtung kann mit 180° verschobener Polarität die Remanenz positiv definiert gesetzt werden und mit einem positiven Anschnittwinkel vor der negativen Halbwelle eingeschaltet werden. Bei einer Netzwechselspannung von 50 Hertz können bei dem oben gewählten Wechselschaltbetrieb schnelle Pulsfolgen mit einer maximalen Taktrate von 25 Hertz geschaltet werden.

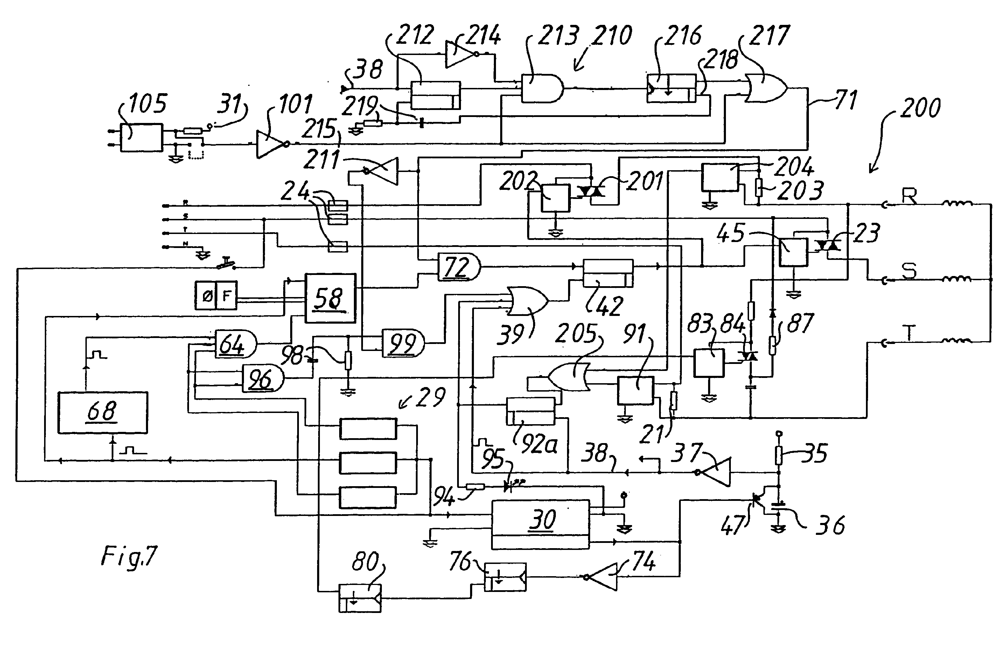

Die Fig. 7 zeigt eine Vorrichtung zur Einschaltstrombegrenzung beim Einsatz eines Drehstromversorgungsgerätes 200. Gleiche Merkmale sind mit gleichen Bezugszeichen versehen. Zu den bekannten Merkmalen im Zusammenhang mit den Anschlüssen S und N tritt im R-Anschluß ein dritter Wechselstromschalter 201 hinzu, der über einen Optokoppler 202 und das Setz-Flip-Flop 42 angesteuert wird. Mit Hilfe eines weiteren Meßshunts 203 wird ein auf dieser Leitung auftretender Überstrom detektiert. Das über dem Meßshunt 203 anliegende Signal wird über einen Optokoppler mit Komparator 204 auf ein ODER-Gatter 205 geleitet, in dem es zu dem im Komparator 91 gebildeten Überstromsignal hinzutritt und das Überstrom-Flip-Flop 92a beaufschlagt. Der T-Anschluß wird dabei ebenfalls auf zu hohen Einschaltstrom überwacht; dies geschieht wie beim Einphasen-Stromversorgungsgerät durch den Meßshunt 21.

Die externe Ein-/Aus-Steuerung über den Optokoppler 105 wird in einer Verzögerungsschaltung 210 verzögert ausgeschaltet, wenn sie beim Einschalten des Drehstromversogungsgerätes 200 aktiv ist. Denn das nur über einen Kondensator 86 erfolgende Setzen der Remanenz gestattet die Unterdrückung von Einschaltspitzen nur sicher in den beschalteten Primärseiten R und T des Transformators 1. Der S-Zweig bleibt stromlos. Das beim Einschalten verlängerte Ein-Signal auf der Leitung 71 gewährleistet das einer Exponentialfunktion folgende Abklingen von Einschaltstromspitzen im S-Zweig durch eine Verlängerung der ersten Heizwellen. Das verlängerte Signal der Leitung 71 wird durch erneute Invertierung durch den Inverter 211 dem UND-Gatter 99 zugeführt.

Die Verzögerungsschaltung 210 verfügt über das an der Leitung 38 anliegende Netz-Ein-Signal für ungefähr 0,1 Sekunden. Dieses Signal setzt das Flip-Flop 212, dessen Ausgang das UND-Gatter 213 beaufschlagt, und beaufschlagt über den Inverter 214 einen anderen Eingang des UND-Gatters. Weiterhin liegt das an dem Ausgang des Inverters 101 anliegende Signal 215 an einem dritten Eingang des UND-Gatters 213 an. An dessen Ausgang liegt also erst nach Beendigung des Netz-Ein-Signals auf der Leitung 38 und einem eventuellen externen Heizsignal 215 ein Pegel Eins-Signal an, das ein Verzögerungsglied oder Monoflop 216 setzt, das das eventuelle Heizsignal 215, das über das ODER-Gatter 217 zur Leitung 71 läuft, verlängert, indem es an einem anderen Eingang des ODER-Gatters 217 anliegt. Dieses erste Verlängern des ersten Heizzyklus gewährleistet, daß beim anschließenden Pulsbetrieb von z.B. 10 Hertz auftretende kleine Einschalt-Stromspitzen im Bereich von 2 Ampère gemäß einer Exponentialfunktion durch Vormagnetisierung aller Zweige abklingen und sich nicht zu einem Inrush verstärken, der entstehen würde, wenn sofort schnell hintereinander ein- und ausgeschaltet wird.

Der invertierte Ausgang 218 des Monoflops 216 ist über ein RC-Glied 219 mit Schaltungsmasse 22 verbunden. Der Ausgang 218, der üblicherweise ein Pegel Null-Signal trägt, ist für die Zeitdauer des verlängerten ersten Heizzyklus ein Pegel Eins-Signal, so daß nach einer durch die Aufladezeit des Kondensators gegebenen Verzögerungszeit nach dem Ende des Netz-Ein-Signals das Flip-Flop 212 zurückgesetzt wird.

Das Remanenz-setzen mit Hilfe des Kondensators 86 ist hier etwas weniger wirkungsvoll wie beim Ein-Phasen-Transformator, weil beim ersten einschalten der Anschnittwinkel nicht genau für alle Zweige stimmt. Beim ausschalten am ende einer negativen Halbwelle ist die Remanenz dann definiert so gesetzt, daß der Anschnittwinkel im Folgenden genau den richtigen Wert aufweist.

## Patentansprüche

1. Vorrichtung zur Wechselstrom-Einschaltbegrenzung eines mit einem ersten Wechselstromschalter (23,45) in Reihe geschalteten induktivitätsbehafteten Stromversorgungsgerätes (1) mit einer Phasenanschnittschaltung, durch die die Verbindung der Primarwicklung (4) eines Transformators (1) des Stromversorgungsgerätes mit der Netzwechselspannung (2,25,26) ab dem Einschaltmoment (8) verzögerbar ist, wobei eine Steuerelektrode (44,45) des ersten Wechselstromschalters (23) der versorgungsspannungsgepufferten (30) Phasenanschnittschaltung mit dem Ausgang einer Steuerschaltung (42-45) verbunden ist, durch die beim Einschalten des Stromversorgungsgerätes (1) bei einer voreinstellbaren Phasenlage der Netzwechselspannung (2,25,26) eine mit dieser synchronisierte Zündspannung erzeugbar ist, die zum Ausschalten des Stromversorgungsgerätes (1) rechtzeitig vor Erreichen eines Nulldurchgangs (115) der Netzwechselspannung (2,25,26) unterdrückbar ist, **dadurch gekennzeichnet,** daß eine Kapazität (86) parallel zu dem induktivitätsbehafteten Stromversorgungsgerät (1) voresehen ist, wobei die Kapazität (86) in Reihe mit einer Parallelschaltung aus einem zweiten Wechselstromschalter (83,84) und einer Reihenanordnung von einem Ladewiderstand (87) und Gleichrichter (88) angeordnet ist, daß der zweite Wechselstromschalter (83,84) einige Millisekunden (77) nach einem Ausschalten bzw. Ausfall der Netzwechselspannung (2,25,26) von einer Netz-aus-Erkennungsschaltung (30,34,74,77,80) zündbar ist, so daß die Kapazität (86) die Remanenz (12) des Stromversorgungsgerätes (1) nach dem Ausschalten definiert setzt (111,112), daß das Stromversorgungsgerät (1) bei einer voreinstellbaren Phasenlage zwischen 90 und 0 Grad (60,61) vor einem Nulldurchgang (115) der Netzwechselspannung (2,25,26) zuschaltbar ist, und daß die Zündspannung des ersten Wechselstromschalters (23,45) zum Ausschalten des Stromversorgungsgerätes (1) bei einem gleichartigen Nulldurchgang rechtzeitig vor Erreichen dieses Nulldurchgangs unterdrückbar ist.

2. Vorrichtung nach Anspruch 1, dadurch gekennzeichnet, daß die Zeitkonstante des aus der Kapazität (86) und dem Ladewiderstand (87) gebildeten Zeitgliedes kleiner als das 1,5-fache der Periodendauer (13 und 17) der Netzwechselspannung und/oder als die Netz-Ein-Impulszeit (38) ist.

3. Vorrichtung nach Anspruch 1 oder 2, dadurch gekennzeichnet, daß bei einem Drehstromversorgungsgerät (200) ein dritter Wechselstromschalter (201,202) zwischen einem weiteren Anschluff (R) des Stromversorgungsgerätes (200) und einem weiteren Anschluff (R) der Netzspannung (R) angeschlossen ist, wobei die Steuerelektrode (202) des dritten Wechselstromschalters (201,202) ebenfalls mit dem Ausgang (70,72) der Phasenanschnittschaltung verbunden ist.

4. Vorrichtung nach einem der Ansprüche 1 bis 3, dadurch gekennzeichnet, daß in Reihe mit dem zweiten Wechselstromschalter (83,84) ein Strombegrenzerwiderstand (85) vorgesehen ist.

5. Vorrichtung nach einem der Ansprüche 1 bis 4, dadurch gekennzeichnet, daß eine zur schnellen Ein-Aus-Schaltung des Stromversorgungsgerätes (1) die Ein-Anschnittschaltung über-steuernde Zeitschalrung (72,99,101,102,103,105) vorgesehen ist.

6. Vorrichtung nach einem der Ansprüche 1 bis 5, dadurch gekennzeichnet, daß die Steuerschaltung (42-45) ein Speicherelement (42) aufweist, das mittels einer netzsynchronisierten (68) Verzögerungsschaltung (58,60,61) bei vorgegebenen Phasenlagen setzbar und rücksetzbar ist.

7. Vorrichtung nach Anspruch 6, dadurch gekennzeichnet, daß die Verzögerungsschaltung einen setzbaren Zähler (58) aufweist, dessen Taktimpulseingang (62) mit dem Ausgang (67) eines netzsynchronisierten Taktgebers (68) verbunden ist.

8. Vorrichtung nach Anspruch 7, dadurch gekennzeichnet, daß der setzbare Zähler (58) bei jedem Nulldurchgang (115) der Netzwechselspannung (2,25,26) setzbar ist.

9. Vorrichtung nach Anspruch 6 oder 7, dadurch gekennzeichnet, daß dem Zähler (58) zur Einstellung des Einschaltphasenwinkels (8) ein Vorlaufwinkelschalter (60,61) zugeordnet ist.

10. Vorrichtung nach einem der Ansprüche 6 bis 9, dadurch gekennzeichnet, daß das Speicherelement (42) bei einem Phasenwinkel zwischen 60 und 0 Grad vor einem Nulldurchgang (115) rücksetzbar ist.

11. Vorrichtung nach einem der Ansprüche 1 bis 10, dadurch gekennzeichnet, daß die Wechselstromschalter (23,84,201) Triacs sind.

## Claims

1. Device for the alternating current cut-in limitation of an inductive power supply unit (1) wired in series with a first alternating current switch (23, 45), with a phase control circuit by which the connection of the primary winding (4) with the mains alternating voltage (2, 25, 26) can be retarded from the cut-in moment on, wherein a control electrode (44, 45) of the first alternating current switch (23) of the supply voltage-buffered (30) phase control circuit is connected with the output of a control circuit by which, as the power supply unit is turned on, at a preselectable phase angle of the mains alternating voltage (2, 25, 26) a firing voltage can be generated which is synchronized with it and which for the shutoff of the power supply unit (1) can be suppressed in due time before reaching a zero pass (115) of the mains alternating voltage (2, 25, 26), characterized in that a capacity (86) is provided parallel to the inductive power supply unit (1), the capacity (86) being arranged in series with a parallel circuit comprising a second alternating current switch (83, 84) and a serial arrangement of charging resistor (87) and rectifier (88), in that the second alternating current switch (83, 84) can be fired several milliseconds (77) after a shutoff or failure of the mains alternating voltage (2, 25, 26) by a mains-off recognition circuit (30, 34, 74, 77, 80), so that the capacity (86) sets (111, 112) in a defined way the remanence (12) of the power supply unit (1) after the shutoff, in that the power supply unit may be turned on at a preselectable phase angle between 90 and 0 degrees (60, 61) before a zero pass (115) of the mains alternating voltage (2, 25, 26), and in that the firing voltage of the first alternating current switch (23, 45) can be suppressed for the shutoff of the power supply unit (1), at a like type zero pass, in due time before reaching said zero pass.

2. Device according to claim 1, characterized in that the time constant of the time section formed of the capacity (86) and the charging resistor (87) is smaller than 1.5 times the period duration (13 and 17) of the mains alternating voltage and/or than the mains-on pulse time (38).

3. Device according to claim 1 or 2, characterized in that on a triphase power supply unit (200) there is a third alternating current switch (201), 202) connected between a further terminal R of the power supply unit (200) and a further terminal R of the mains voltage R, where the control electrode (202) of the third alternating current switch (201, 202) connects as well with the output (70, 72) of the phase control circuit.

4. Device according to one of the claims 1 through 3, characterized in that in series with the second alternating current switch (83, 84) there is a current limiting resistor (85) provided.

5. Device according to one of the claims 1 through 4, characterized in that a time section (72, 99, 101, 102, 103, 105) is provided which for the quick cut-in and cut-out of the power supply unit (1) overrides the cut-in control circuit.

6. Device according to one of the claims 1 through 5, characterized in that the control circuit features a storage element (2) which by means of a mains-synchronized (68) retardation circuit (58, 60, 61) can be set and reset at predetermined phase angles.

7. Device according to claim 6, characterized in that the retardation circuit features a settable counter (58) whose clock pulse input (62) is connected with the output (67) with a mains-synchronized clock generator (68).

8. Device according to claim 7, characterized in that the settable counter (58) can be set at each zero pass (115) of the mains alternating voltage (2, 25, 26).

9. Device according to claim 6 or 7, characterized in that with the counter (58) there is for adjustment of the cut-in phase angle (8) a lead angle switch (60, 61) coordinated.

10. Device according to one of the claims 6 through 9, characterized in that the storage element (42) can be reset at a phase angle between 60 and 0 degrees before a zero pass (115).

11. Device according to one of the claims 1 through 10, characterized in that the alternating current switches (23, 84, 201) are triacs.

## Revendications

1. Dispositif limiteur de commutation à courant alternatif d'un bloc d'alimentation à inductance (1), qui est monté en série à un premier commutateur à courant alternatif (23, 45), comprenant un circuit de réglage de phase qui permet le retard de la connexion entre l'enroulement primaire (4) d'un transformateur (1) dudit bloc d'alimentation et la tension alternative du réseau (2, 25, 26) à départ d'un moment de la fermeture du circuit (8), une électrode de commande (44, 45) dudit premier commutateur à courant alternatif (23) du circuit de réglage de phase, qui est tamponné (30) en tension d'alimentation, étant raccordée à la sortie d'un circuit de commande (42-45) qui permet, à la mise en circuit du bloc d'alimentation (1) à une relation des phases pré-selectable de la tension alternative du réseau(2, 25, 26), la génération d'une tension d'allumage y synchronisée, laquelle on peut supprimer, en temps utile avant qu'un passage par zéro (115) de la tension alternative du réseau (2, 25, 26) soit atteint, pour l'arrêt du bloc d'alimentation (1),
**caractérisé** en ce qu'un élément capacitif (86) est prévu en parallèle au bloc d'alimentation à inductance (1), ledit élément capacitif (86) étant monté en série à un circuit parallèle constitué par un deuxième commutateur à courant alternatif (83, 84) et un montage en série d'un résisteur de charge (87) et un redresseur (88); que le deuxième commutateur à courant alternatif (83, 84) peut être allumé quelques millisecondes après une opération d'arrêt ou la défaillance de la tension alternative du secteur (2, 25, 26), au moyen d'un circuit de reconnaissance d'arrêt de secteur (30, 34, 74, 77, 80), de façon que ledit élément capacitif (86) sélectionne et définit (111, 112) la rémanence du bloc d'alimentation (1) après de son arrêt; que ledit bloc d'alimentation (1 se peut raccorder à une relation des phases préselectable entre 90 et 0 degrés (60, 61) avant un passage par zéro (115 de la tension alternative du secteur (2, 25, 26), et en ce que la tension d'allumage dudit premier commutateur à courant alternatif (23, 45) peut être supprimé pour mettre le bloc d'alimentation (1) hors circuit à un passage par zéro similaire en temps utile avant ce passage par zéro.

2. Dispositif selon la revendication 1,
**caractérisé** en ce que la constante de temps du circuit de temporisation constitué par l'élément capacitif (86) et le résisteur de charge (87) est plus petit que 1.5 fois la durée de période (13 et 17) de la tension alternative du secteur et/ou que le temps d'impulsion de circuit du secteur (38).

3. Dispositif selon la revendication 1 ou 2,
**caractérisé** en ce qu'un troisième commutateur à courant alternatif (201, 202) est branché dans un bloc d'alimentation à courant triphasé (200) entre une autre connexion (R) dudit bloc d'alimentation (200) et une autre connexion (R) de la tension du rsecteur (R), l'electrode de commande (202) dudit troisième commutateur à courant alternatif (201, 202) étant également relié à la sortie (70, 72) du circuit de réglage de phase.

4. Dispositif selon une quelconque des revendications 1 à 3,
**caractérisé** en ce qu'un résisteur limiteur de courant (85) est monté en série audit deuxième commutateur à courant alternatif (83, 84).

5. Dispositif selon une quelconque des revendications 1 à 4,
**caractérisé** en ce qu'un circuit de temporisation (72, 99, 101, 102, 103, 105) est monté pour la mise rapide en/hors circuit dudit bloc d'alimentation (1), qui surrègle ledit circuit de réglage de phase.

6. Dispositif selon une quelconque des revendications 1 à 5,
**caractérisé** en ce que ledit circuit de commande (42-45 comprend un élément de mémorisation (42) approprié à être sélectionné et remis aux relations des phases déterminées, moyennant un circuit de retard (58, 60, 61) synchronisé (68) au réseau.

7. Dispositif selon la revendication 6,
**caractérisé** en ce que ledit circuit de retard comprend un compteur sélectionnable (58) dont l'entrée d'impulsions de synchronisation (62) est reliée à la sortie (67) d'un rythmeur (68) synchronisé au réseau.

8. Dispositif selon la revendication 7,
**caractérisé** en ce que ledit compteur sélectionnable (58) est approprié à être sélectionné à chaque passage par zéro (115) de la tension alternative du secteur (2, 25, 26).

9. Dispositif selon la revendication 6 ou 7,
**caractérisé** en ce qu'un commutateur d'angle d'avance (60, 61) est affecté audit compteur (58) pour la sélection de l'angle de phase de commutation (8).

10. Dispositif selon l'une quelconque des revendications 6 à 9,
**caractérisé** en ce que ledit élément de mémorisation (42) est approprié à être remis à un angle de phase entre 60 et 0 degré avant un passage par zéro (115).

11. Dispositif selon une quelconque des revendications 1 à 10,
**caractérisé** en ce que lesdits commutateurs à courant alternatif (23, 34, 201) sont des triacs.
